# FASCICULE DE BREVET EUROPEEN

(11) **EP 4 081 387 B1**
(45) Date de publication et mention de la délivrance du brevet: **02.08.2023**
(21) Numéro de dépôt: 20833902.8
(22) Date de dépôt: 22.12.2020
(51) Int. Cl.: B29C 49/42, B29C 49/06, B29C 49/36, B29C 49/64, B29C 49/78, B29K 67/00, B29L 31/00

(54) **PROCEDE D'ORIENTATION ANGULAIRE DE CORPS CREUX DANS UNE INSTALLATION DE FABRICATION DE RECIPIENTS**
VERFAHREN ZUR WINKELORIENTIERUNG VON HOHLKÖRPERN IN EINER ANLAGE ZUR HERSTELLUNG VON BEHÄLTERN
METHOD FOR ANGULAR ORIENTATION OF HOLLOW BODIES IN A PLANT FOR MANUFACTURING CONTAINERS

(30) Priorité: 26.12.2019 FR 1915597
(43) Date de publication de la demande: 02.11.2022
(73) Titulaire: Sidel Participations, 76930 Octeville-sur-Mer (FR)
(72) Inventeur: BOURVELLEC, Loïc, 76930 Octeville-sur-Mer (FR); PASQUIER, Hervé, 76930 Octeville-sur-Mer (FR); PROTAIS, Pierrick, 76930 Octeville-sur-Mer (FR)
(74) Mandataire: Sidel Group
(86) Numéro de dépôt international: PCT/EP2020/087663
(87) Numéro de publication internationale: WO 2021/130243

(56) Documents cités:
- FR-A1- 2 874 193
- US-A- 5 853 775
- US-A1- 2003 077 349
- US-B1- 6 464 486

## Description

### Domaine technique de l'invention

L'invention concerne un procédé de régulation de la position angulaire de corps creux dans une installation de fabrication de récipients par formage des préformes en matériau thermoplastique dans laquelle les corps creux sont déplacés en file le long d'un itinéraire de production par des organes individuels de support, et dont chacun est équipé de moyens pour faire tourner la préforme autour de son axe, le procédé comportant une première étape de mesure d'un décalage angulaire d'au moins une préforme déterminée par rapport à une position angulaire de référence dans une zone déterminée de mesure de l'itinéraire de production. De tels procédés sont décrits dans les documents US5853775A et FR2874193A1.

### Arrière-plan technique

Dans la suite de la description et dans les revendications, les termes "corps creux" désigneront indifféremment une préforme ou un récipient.

Il est connu de réaliser des récipients en matériau thermoplastique et notamment en polyéthylène téréphtalate (PET) par formage, et notamment par étirage-soufflage, de préformes dont le corps est préalablement chauffées. Les corps creux présentent un col qui est déjà moulé à sa forme définitive et qui est donc destiné à demeurer inchangé durant la production du récipient.

Dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après formage présente l'inconvénient d'être économiquement peu rentable du fait de leur volume très important.

La production en grande série de tels récipients est réalisée dans une installation de fabrication de récipients dans laquelle les corps creux suivent en file un itinéraire de production.

Pour permettre son formage, le corps de la préforme est chauffé au-delà d'une température de transition vitreuse permettant de rendre la paroi du corps malléable. Au contraire, le col est maintenu à une température inférieure à la température de transition vitreuse pour éviter sa déformation. A cet effet, l'installation de fabrication comporte, une station de chauffage qui permet de chauffer le corps des préformes à la température requise pour réaliser l'étape de formage.

Puis les préformes ainsi chauffées sont ensuite acheminées jusqu'à une station de formage de l'installation de fabrication. La station de formage est équipée de nombreux postes de formage dont chacun comporte un moule et un dispositif d'injection d'un fluide de formage sous pression dans une préforme reçue dans le moule. Le grand nombre de postes de formage permet de produire les récipients à une cadence élevée, par exemple supérieure ou égale à 50 000 bouteilles par heure. Les postes de formage sont par exemple portés par un carrousel qui tourne de manière que les préformes soient soufflées les unes après les autres à grande cadence pendant leur déplacement entre un point d'introduction correspondant à l'introduction des préformes dans un moule associé, et un point de démoulage correspondant à l'éjection des récipients formés à l'extérieur des moules.

Les récipients ainsi obtenus sont réceptionnés à leur sortie de moule par des moyens de préhension d'une roue de transfert afin qu'ils soient acheminés à la file vers un autre dispositif via, par exemple, un convoyeur. La station suivante est par exemple une station de remplissage ou une station d'étiquetage.

Les stations sont généralement elles-mêmes équipées de dispositifs de transport des récipients, tels que des carrousels. L'installation de fabrication est aussi équipée de dispositifs de transport entre deux stations.

Il est parfois nécessaire de modifier l'orientation angulaire des corps creux durant leur déplacement à travers l'installation de fabrication.

Une telle modification de l'orientation angulaire est par exemple nécessaire lorsque les récipients à obtenir présentent au moins un tronçon qui n'est pas axisymétrique par rapport à l'axe du col. Pour obtenir de tels récipients non axisymétriques, les préformes sont généralement chauffées de manière préférentielle sur certaines parties, selon un procédé généralement appelé "chauffe préférentielle". Les préformes sont ensuite reçues dans les moules avec une orientation bien déterminées autour de leur axe principal pour faire correspondre le profil de chauffe des corps avec l'empreinte du récipient non axisymétrique à obtenir.

Pour garantir que l'orientation des préformes demeure maîtrisée entre leur entrée dans la station de chauffage et leur sortie de la station de formage, les dispositifs de transport comportent des organes individuels de support qui sont conçus tenir la préforme de manière à éviter un glissement entre la préforme et son organe individuel de support, notamment pour éviter toute rotation non maîtrisée de la préforme autour de son axe principal.

Il est connu d'équiper le col des préformes avec un repère angulaire qui permet de contrôler et de corriger leur orientation angulaire autour de l'axe du col par rapport à un support. Le col conservant sa forme durant le procédé de réalisation du récipient, ce repère angulaire demeure utilisable pour permettre l'orientation de la préforme et du récipient fini autour de l'axe de son col tout au long du processus de fabrication et lors des traitements ultérieurs.

Ce repère angulaire permet de déterminer l'orientation angulaire de la préforme ou du récipient par rapport à chaque organe individuel de support, et éventuellement de modifier l'orientation angulaire de la préforme ou de l'organe individuel de support pour amener le repère angulaire dans une position de référence déterminée par rapport à l'organe individuel de support.

De manière non limitative, un tel repère angulaire peut être réalisé lors du moulage par injection de la préforme sous forme d'un repère angulaire en relief. Il s'agit par exemple d'une entaille réalisée dans une collerette du col, ou encore d'un ergot réalisé dans une gorge située au-dessus de la collerette. La préforme est ainsi déjà équipée de son repère angulaire avant d'alimenter l'installation de fabrication de récipients.

Une telle préforme est indexée angulairement une première fois lorsqu'elle est prise en charge par la station de chauffage afin de faire correspondre le profil de chauffe avec le repère angulaire qui équipe déjà la préforme.

Cependant, lorsque la préforme est transférée d'un dispositif de transport au dispositif de transport suivant, il peut arriver que la préforme subisse un pivotement non maîtrisé autour de son axe principal par rapport aux organes individuels de support. De même, lorsque la préforme est déposée dans un moule de la station de formage, elle reste libre de tourner autour de son axe principal pendant un laps de temps très court entre le moment où elle est lâchée dans le moule par le dispositif de transport directement amont et le moment où elle est bloquée par une tuyère du poste de moulage.

Pour pallier à ce problème, pour chaque préforme, l'orientation de la préforme est vérifiée en une zone de mesure de leur itinéraire de production et, lorsqu'un décalage angulaire est détecté par rapport à une position angulaire de référence, l'orientation de ladite préforme est corrigée lors d'une opération de correction dans une zone de correction de l'itinéraire de production qui est agencée en aval de la zone de mesure, par exemple lorsqu'elle est prise en charge par la station de formage, pour que le profil de chauffe de ladite préforme corresponde bien à l'empreinte du moule.

Selon une variante connue, la correction est effectuée sans mesure, en tournant la préforme jusqu'à ce qu'un capteur détecte que le repère angulaire équipant le col est dans la position angulaire de référence.

Lorsque la préforme est prise en charge dans la station de chauffage avec une erreur d'indexation angulaire, son profil de chauffe ne coïncide plus avec son repère angulaire. Cette erreur se répercute dans le moule, puisque l'orientation de la préforme dans le moule est déterminée grâce à son repère angulaire. Il est donc nécessaire de vérifier l'orientation de la préforme en une zone de mesure en début d'un trajet de chauffage puis de corriger l'orientation de ladite préforme en aval de la zone de mesure pour que son profil de chauffe corresponde bien à la position du repère angulaire.

Cependant, chaque opération de correction de la position de la préforme présente une durée proportionnelle à la valeur du décalage angulaire à corriger dans la zone de correction. Il en résulte que le débit de production est limité par l'opération de correction.

En outre, il arrive que le profil de chauffe soit légèrement décalé par rapport à la position du repère angulaire. Ceci peut être dû à un glissement des préforme entre la première zone de mesure et leur prise en charge par la station de chauffage.

### Résumé de l'invention

L'invention propose un procédé de régulation de la position angulaire de corps creux dans une installation de fabrication de récipients par formage de préformes en matériau thermoplastique dans laquelle les corps creux sont déplacées en file le long d'un itinéraire de production par des organes individuels de support, et dont chacun est équipé de moyens pour faire tourner le corps creux autour de son axe, le procédé comportant une première étape de mesure d'un décalage angulaire d'au moins un corps creux déterminé par rapport à une position angulaire de référence dans une zone déterminée de mesure de l'itinéraire de production, caractérisé en ce qu'il comporte une deuxième étape de compensation de la position angulaire des corps creux suivants dans une zone de compensation agencée en amont de ladite zone de mesure au cours de laquelle l'orientation angulaire des corps creux suivants est modifiée d'un angle actualisé de compensation qui est fonction du décalage angulaire mesuré pour l'au moins une préforme déterminée lors de la première étape et qui est fonction d'un angle courant de compensation de manière à réduire le décalage angulaire des corps creux dans ladite zone de mesure.

Selon d'autres caractéristiques de l'invention :
- la valeur de l'angle courant de compensation est modifiée lors de la deuxième étape lorsque la moyenne des décalages angulaire de chaque corps creux d'un train d'au moins deux corps creux déterminés consécutifs mesuré lors de la première étape de détection est, en valeur absolue, supérieure à un seuil déterminé ;
- lors de la deuxième étape de compensation, l'angle actualisé de compensation est calculé en retranchant la moyenne des décalages angulaires du train de préformes déterminées de l'angle courant de compensation ;
- le procédé est réitéré cycliquement, l'angle courant de compensation étant formé par l'angle actualisé de compensation de l'itération précédente ;
- lors de la première itération, l'angle courant de compensation est initialisé à 0° ;
- l'installation comporte une station de chauffage qui est équipée d'un dispositif de transport muni d'organes de support, appelés tournettes, dont chacun permet de transporter individuellement une préforme le long d'un trajet de chauffage formant un tronçon de l'itinéraire de production et dont chacun permet de faire tourner la préforme autour de son axe, la zone de compensation étant agencée sur le trajet de chauffage pendant que les préformes sont supportées par une tournette, la compensation de la position angulaire des préformes étant réalisée par rotation de chaque tournette de l'angle actualisé de compensation à leur passage dans la zone de compensation ;
- le dispositif de transport comporte une chaîne de tournettes qui est guidée en déplacement par deux roues de guidage, la zone de compensation étant située dans un brin de la chaîne qui engraine l'une des roues de guidage ;
- la zone de compensation est située dans un brin de la chaîne qui engraine une roue de guidage en aval d'un point de prise en charge sur lequel les préformes sont transférée depuis un dispositif de transport amont et avant le début du chauffage de la préforme ;
- la zone de mesure est située dans la station de chauffage dans un brin de la chaîne qui engraine une roue de guidage, en amont d'un point de transfert sur lequel les préformes sont transférée vers un dispositif de transport aval en direction d'une station de formage et après que le chauffage de la préforme ait été finalisé ;
- l'installation de fabrication comporte une station de formage dans laquelle chaque corps creux est déplacé le long d'un trajet de formage formant un tronçon de l'itinéraire de production, chaque préforme subissant une opération de formage en récipient final le long du trajet de formage ;
- la zone de compensation est située dans un brin de la chaîne qui engraine une roue de guidage, en amont d'un point de transfert sur lequel les préformes sont transférée vers un dispositif de transport aval en direction d'une station de formage et après que le chauffage de la préforme ait été finalisé ;
- la zone de mesure est située dans la station de formage agencée en aval de la station de chauffage avant que l'opération de formage ne soit commencée ;
- la zone de compensation est située le long du trajet de formage, avant que l'opération de formage ne soit commencée ;
- la zone de mesure est située dans la station de formage le long du trajet de formage, après que l'opération de formage ait été finalisée.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue de dessus qui représente schématiquement une installation de fabrication de récipients à partir de préformes ;
[Fig. 2] La figure 2 est une vue de profil qui représente une préforme destinée à être prise en charge par l'installation de la figure 1 ;
[Fig. 3] La figure 3 est une vue de dessus à plus grande échelle qui représente schématiquement une station de chauffage appartenant à l'installation de fabrication de la figure 1 ;
[Fig. 4] La figure 4 est une vue en coupe selon le plan de coupe 4-4 de la figure 3 qui représente une portion d'une chaîne de transport de préformes à travers la station de chauffage ;
[Fig. 5] La figure 5 est une vue en coupe selon le plan de coupe 5-5 de la figure 3 qui représente une préforme portée par une tournette qui est en prise avec un dispositif d'orientation de la tournette ;
[Fig. 6] La figure 6 est une vue en coupe selon le plan de coupe 6-6 de la figure 5 qui représente un maneton d'une tournette engagé entre deux doigt du dispositif d'orientation ;
[Fig. 7] La figure 7 est une vue en coupe axiale qui représente un poste de formage équipant une station de formage de l'installation de la figure 1 et dans un moule de laquelle une préforme est installée, une tuyère du poste de formage occupant une position extrême escamotée ;
[Fig. 8] La figure 8 est une vue similaire à celle de la figure 7 qui représente la tuyère dans une position extrême de travail dans laquelle elle est apte à injecter un fluide de formage à l'intérieur de la préforme ;
[Fig. 9] La figure 9 est une vue similaire à celle de la figure 7 dans laquelle la tuyère occupe une position intermédiaire d'orientation, un organe d'entraînement de la tuyère étant en prise avec la préforme pour permettre son entraînement en rotation ;
[Fig. 10] La figure 10 est une vue en élévation qui représente un carrousel de la station de formage qui porte une pluralité de postes de formage, la station de formage étant équipée de deux dispositifs de prise d'image ;
[Fig. 11] La figure 11 est une vue en perspective qui représente le col d'un corps creux comportant quatre repères angulaires ;
[Fig. 12] La figure 12 est une vue de dessus qui représente le col d'une préforme lors de son passage en un point de mire visé par l'un des dispositifs de prise d'image de l'installation, la préforme étant orientée selon une première orientation angulaire actuelle ;
[Fig. 13] La figure 13 est une vue similaire à celle de la figure 12 qui représente une autre préforme orientée selon une deuxième orientation angulaire actuelle;
[Fig. 14] La figure 14 représente une image du col de la préforme de la figure 12 prise de côté par le dispositif de prise d'image de la figure 12 ;
[Fig. 15] La figure 15 représente une image du col de la préforme de la figure 13 prise de côté par le dispositif de prise d'image de ladite figure 13 ;
[Fig. 16] La figure 16 représente un diagramme représentant en abscisse le décalage angulaire mesuré entre la position angulaire actuelle d'un corps creux et une position angulaire de référence, et représentant en ordonnée le nombre de corps creux présentant ledit décalage angulaire, une courbe représentant la distribution des décalages angulaires pour un train de plusieurs corps creux, la moyenne des décalages angulaires étant décalées par rapport à la valeur 0° ;
[Fig. 17] La figure 17 représente un diagramme similaire à celui de la figure 16 dans lequel la moyenne des décalages angulaires égale à 0° ;
[Fig. 18] La figure 18 est un schéma-bloc qui représente le procédé de compensation réalisé selon les enseignements de l'invention.

### Description détaillée de l'invention

Dans la suite de la description des éléments présentant une structure identique ou des fonctions analogues seront désignés par une même référence.

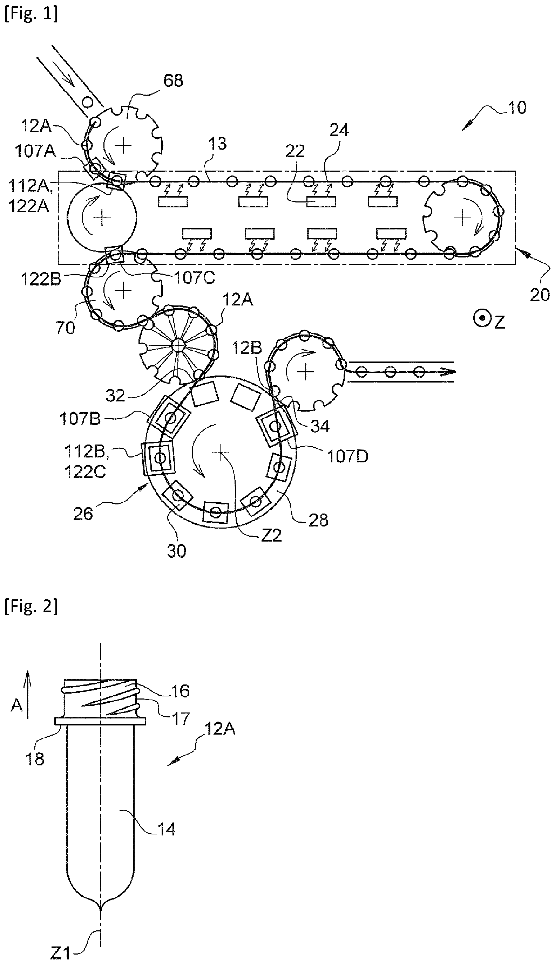

On a représenté à la figure 1 une installation 10 de fabrication de récipients 12B à partir de préformes 12A. Par la suite et dans les revendications, on désignera de manière indifférenciée les préformes 12A et les récipients 12B par le terme générique corps 12 creux.

Dans la suite de la description, on utilisera les termes "amont" et "aval" en référence au sens de déplacement des corps creux 12 en file le long d'un itinéraire 13 de production.

L'invention est destinée à être appliquée lorsque l'installation 10 de fabrication produit des récipients 12B.

L'itinéraire 13 de production s'étend ici dans un plan globalement horizontal, tandis que les corps 12 creux présentent un axe "Z1" principal qui s'étend verticalement, c'est-à-dire de manière orthogonale au plan horizontal.

Les corps 12 creux sont déplacés de manière continue à travers l'installation 10 de fabrication le long de l'itinéraire 13 de production qui est indiqué en trait gras à la figure 1. Le déplacement des corps 12 creux est réalisé par divers dispositifs de transport, dont certains seront décrits en détails par la suite, qui comportent des organes individuel de support de chaque corps 12 creux. Les dispositifs de transport sont agencés à la chaîne de manière que chaque corps 12 creux puisse être transféré d'un dispositif de transport à l'autre pour poursuivre l'itinéraire 13 de production en étant maintenue en permanence par au moins un organe individuel de support.

Dans la suite de la description, les valeurs angulaires sont exprimées en degré.

On a représenté schématiquement à la figure 1 l'installation 10 de fabrication en série de récipients 12B en matériau thermoplastique à partir de préformes 12A. De manière non limitative, les récipients 12B sont ici des bouteilles. Le matériau thermoplastique est ici formé par du polyéthylène téréphtalate, désigné par la suite sous son acronyme "PET".

On a représenté à la figure 2 un exemple de corps 12 creux, ici sous forme de préforme 12A. Une telle préforme 12A est réalisée en matériau thermoplastique, ici en polyéthylène téréphtalate (PET). La préforme 12A est globalement axisymétrique, et elle présente un axe "Z1" principal représenté verticalement à la figure 2. Elle comporte un corps 14 présentant une extrémité axiale fermée, représenté en bas à la figure 2. Le corps 14 débouche par son extrémité opposée, représentée en haut à la figure 2, dans un col 16 ouvert. Le col 16 présente une forme tubulaire dont l'axe principal définit l'axe "Z1" principal de la préforme 12A.

Le corps 14 présente généralement une forme axisymétrique de tube allongé selon l'axe "Z1" principal. Le col 16 de la préforme comporte aussi une collerette 18 annulaire qui fait saillie radialement. Le col 16, y compris la collerette 18, est délimité vers l'extérieur par une face 17 externe.

Une portion de la face 17 externe du col 16 présente une forme globalement cylindrique. Elle comporte généralement des moyens de fixation d'un bouchon, par exemple un filet ou une gorge pour l'emboîtement élastique du bouchon.

En se reportant à la figure 1, l'installation 10 de fabrication comporte une station 20 de chauffage des préforme 12A. A titre d'exemple non limitatif, la station 20 de chauffage comporte des organes 22 de chauffage émettant un rayonnement électromagnétique chauffant, par exemple un rayonnement infrarouge, tels que des lampes halogènes ou des émetteurs laser. En général, des réflecteurs (non représentés) sont agencés en vis-à-vis de chaque organe 22 de chauffage de part et d'autre du trajet de chauffage pour permettre de réfléchir le rayonnement chauffant en direction des préformes.

Comme cela sera expliqué plus en détails par la suite, la station 20 de chauffage comporte un dispositif 24 de transport des corps 12 creux sous forme de préformes 12A qui est agencé de manière à les faire défiler le long des organes 22 de chauffage. Le sens de défilement des préformes 12A est indiqué par les flèches de la figure 1.

A leur sortie de la station 20 de chauffage, le corps 14 des préformes 12A est rendu malléable par chauffage au-delà d'une température de transition vitreuse, tandis que le col 16 est maintenu à une température suffisamment basse pour conserver sa forme d'origine.

L'installation 10 de fabrication comporte aussi une station 26 de formage des préformes 12A ainsi chauffés en récipients 12B finaux. La station 26 de formage est agencée en aval de la station 20 de chauffage en référence au flux de corps 12 creux le long de l'itinéraire 13 de production.

La station 26 de formage comporte ici un carrousel 28 portant une pluralité de postes 30 de formage. Le carrousel 28 est monté rotatif autour d'un axe "Z2" central. Chaque poste 30 de formage est ainsi susceptible de se déplacer autour de l'axe "Z2" du carrousel 28 entre un point 32 d'introduction des préformes 12A chaudes et un point 34 de démoulage des récipients 12B finaux avant de reprendre un nouveau cycle. Les postes 30 de formage seront décrits plus en détails par la suite.

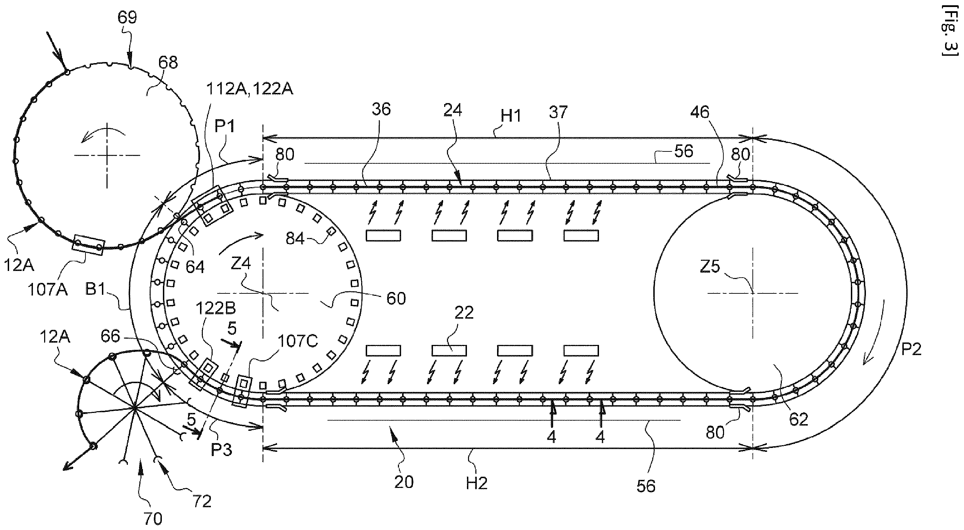

En se reportant à la figure 3, on a représenté plus en détails la station 20 de chauffage. Le dispositif 24 de transport permet de déplacer les préformes 12A en file le long d'un trajet 36 de chauffage qui est indiqué en gras à la figure 3. Le trajet 36 de chauffage forme un tronçon de l'itinéraire 13 de production.

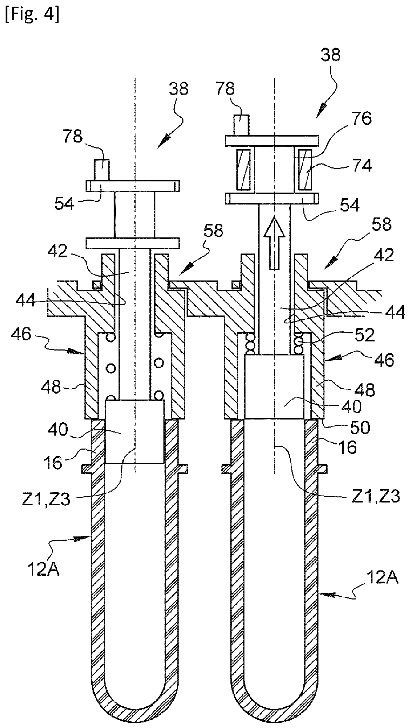

Le dispositif 24 de transport comporte une chaîne 37 d'organes individuels de support, par la suite appelés "tournettes 38", dont chacun est apte à supporter individuellement une préforme 12A. Comme représenté à la figure 4, une telle tournette 38 comporte un mandrin 40 qui est solidarisé temporairement avec le col 16 d'une préforme 12A le temps de son transport le long du trajet 36 de chauffage. La préforme 12A est notamment immobilisée en rotation autour de son axe "Z1" principal, par rapport au mandrin 40.

Le mandrin 40 est par exemple enfoncé à force dans le col 16 de la préforme 12A qui est ainsi temporairement solidarisée avec le mandrin 40 par frottement. Le frottement nécessaire est par exemple fourni par une bague en matériau élastomère (non représentée) qui est disposée dans une gorge autour du mandrin 40.

Le mandrin 40 est fixé à l'extrémité inférieure d'un arbre 42 d'axe "Z3" coaxial à l'axe "Z1" principal de la préforme 12A portée. L'arbre 42 est reçu dans un palier 44 de guidage d'un maillon 46 du dispositif 24 de transport. L'arbre 42 est plus particulièrement monté rotatif dans le palier 44 de guidage autour de son axe "Z3" principal. Cette rotation permet avantageusement de pouvoir exposer de manière maîtrisée la totalité du corps 14 de la préforme 12A au rayonnement chauffant émis par les organes 22 de chauffage.

En outre, l'arbre 42 est ici monté coulissant verticalement par rapport au maillon 46. Le maillon 46 comporte un manchon 48 inférieur qui présente une face 50 annulaire d'extrémité inférieure dite "face 50 de dévêtissage". L'arbre 42 est ainsi monté coulissant entre une position inférieure active, comme représenté à gauche sur la figure 4, dans laquelle le mandrin 40 est susceptible d'être solidarisé avec un col 16 de préforme 12A, et une position supérieure inactive, comme représenté à droite à la figure 4, dans laquelle le mandrin 40 est rétracté dans le manchon 48, au-dessus de la face 50 de dévêtissage, pour permettre la désolidarisation du mandrin 40 du col 16 de la préforme 12A qui reste bloquée à l'extérieur du manchon 48 par butée contre la face 50 de dévêtissage.

De manière non limitative, le mandrin 40 est ici commandé vers sa position inactive au moyen d'un dispositif à came (non représenté), tandis qu'il est sollicité vers sa position active par un organe 52 élastique, ici un ressort, qui est interposé verticalement entre le mandrin 40 et le maillon 46.

La rotation du mandrin 40 autour de l'axe "Z1" principal de la préforme 12A est ici commandée au moyen d'un pignon 54 qui est ici agencé à une extrémité supérieure de l'arbre 42, au-dessus du maillon 46. Le pignon 54 est destiné à coopérer avec une crémaillère 56 qui est disposée sur au moins un tronçon du trajet 36 de chauffage.

En variante non représentée de l'invention, la rotation du mandrin 40 est commandée par un moteur électrique individuel qui est embarqué sur le maillon 46. La rotation est alors commandée par une unité électronique de commande.

Chaque maillon 46 porte ici une seule tournette 38. Les maillons 46 sont montés articulés en chaîne les uns aux autres autour de l'axe "Z3" principal par l'intermédiaire d'une charnière 58. Les maillons 46 sont ainsi assemblés pour former la chaîne 37 fermée.

La chaîne 37 est engrenée autour d'une première roue 60 de guidage et d'une deuxième roue 62 de guidage qui sont chacune montées rotatives autour d'axes "Z4, Z5" verticaux. Au moins l'une des roues 60, 62 de guidage est entraînée, ici dans un sens horaire, par au moins un moteur (non représenté), pour permettre l'entraînement de la chaîne 37.

Chaque tournette 38 est ici déplacé en continu, c'est-à-dire sans interruption, le long d'un circuit fermé. Une section utile, représentée en trait gras à la figure 3, dudit circuit fermé forme le trajet 36 de chauffage le long duquel chaque tournette 38 est destinée à embarquer une préforme 12A. Une autre section à vide, que les tournettes 38 parcourent à vide, complète le circuit. Sur le trajet 36 de chauffage, chaque tournette 38 transporte une préforme 12A depuis un point 64 de prise en charge des préformes 12A jusqu'à un point 66 de transfert des préformes 12A vers la station 26 de formage. Le point 64 de prise en charge et le point 66 de transfert sont agencés en périphérie de la première roue 60 de guidage.

Les préformes 12A sont acheminées une par une jusqu'au point 64 de prise en charge par un dispositif de transport amont, par exemple au moyen d'une roue 68 à encoches. Au point 64 de prise en charge, chaque mandrin 40 est emmanché dans le col 16 d'une préforme 12A acheminée par la roue 68 à encoches. La roue 68 à encoches est munie d'encoches 69 à sa périphérie dont chacune est destinée à supporter une préforme 12A.

A l'issue du trajet 36 de chauffage, les préformes 12A chaudes sont transférées à un dispositif de transport aval, par exemple une roue 70 de transfert qui est ici équipée de pinces 72 qui sont destinées à saisir chaque préforme 12A par leur col 16. Les tournettes 38 sont alors commandées vers leur position inactive au moyen d'une fourchette 74 de commande, visible à la figure 4, qui est ici portée par la première roue 60 de guidage. Chaque fourchette 74 de commande est montée coulissante verticalement. Le coulissement de chaque fourchette 74 de commande est par exemple commandé par came (non représentée). La première roue 60 de guidage comporte plus particulièrement plusieurs fourchettes 74 à sa périphérie. Une gorge 76 de chaque tournette 38 est destinée à être en prise avec une fourchette 74 pour commander son coulissement, comme illustré à la figure 4.

Sur la section à vide, les tournettes 38 se déplacent à vide depuis le point 66 de transfert jusqu'au point 64 de prise en charge. La section à vide est agencée sur un brin "B1" de la chaîne 37 qui est engrené autour de la première roue 60 de guidage.

Le trajet 36 de chauffage comporte au moins un tronçon actif le long duquel le corps 14 de la préforme 12A est exposé directement au rayonnement chauffant des organes 22 de chauffage, symbolisé par des flèches en forme d'éclair à la figure 3, et au moins un tronçon passif le long duquel le corps 14 de la préforme 12A n'est pas exposé au rayonnement chauffant des organes 22 de chauffage.

Dans l'exemple illustré à la figure 3, la station 20 de chauffage comporte un tronçon "H1" actif amont, parfois appelé tronçon de "pénétration", et un tronçon "H2" actif aval, parfois appelé tronçon de "distribution", qui sont formés par deux brins rectilignes de la chaîne 37 de transport tendus entre les deux roues 60, 62 de guidage. Les organes 22 de chauffage sont agencés le long de ces deux tronçons "H1, H2" actifs de manière que le corps 14 des préformes 12A parcourant ces tronçons "H1, H2" actifs soient exposés au rayonnement chauffant. Les préformes 12A sont généralement entraînées en rotation autour de leur axe "Z1" principal lorsqu'elles parcourent les tronçons "H1, H2" actifs de chauffage pour permettre de chauffer le corps 14 des préformes 12A sur toute leur circonférence. A cet effet, chaque tronçon "H1, H2" comporte une crémaillère 56 pour l'entraînement en rotation des tournettes 38.

Le trajet 36 de chauffage comporte ici trois tronçons passifs le long duquel le corps 14 des préformes 12A n'est pas exposé au rayonnement chauffant émis par les organes 22 de chauffage. Aucun organe de chauffage n'est ici agencé le long des tronçons passifs.

Un premier tronçon "P1" passif amont est agencé entre le point 64 de prise en charge et le tronçon "H1" actif amont. Le premier tronçon "P1" passif amont est ainsi situé dans un brin de la chaîne 37 qui engraine la première roue 60 de guidage.

Un deuxième tronçon "P2" passif intermédiaire est intercalé entre le tronçon "H1" actif amont et le tronçon "H2" actif aval. Le deuxième tronçon "P2" passif intermédiaire présente plus particulièrement une forme en arc de cercle, car il s'étend sur un brin de la chaîne 37 qui est engrené autour de la deuxième roue 62 de guidage.

Le troisième tronçon "P3" passif aval est agencé entre l'extrémité aval du tronçon "H2" actif aval et le point 66 de transfert. Le troisième tronçon "P3" passif amont est ainsi situé dans un brin de la chaîne 37 qui engraine la première roue 60 de guidage. Des organes (non représentés) de protection sont prévus pour protéger le col 16 des préformes 12A du rayonnement chauffant afin de maintenir le col 16 à une température inférieure à la température de transition vitreuse.

L'orientation de chaque tournette 38 est maîtrisée pendant tout le trajet 36 de chauffage. Dans le mode de réalisation représenté aux figures, notamment à la figure 4, chaque tournette 38 comporte ici un maneton 78 qui est agencé de manière excentrée par rapport à l'axe "Z3" de rotation. Le maneton 78 est destiné à permettre d'orienter correctement la tournette 38 lors du passage de chaque tronçon passif "P1, P2, P3" au tronçon "H1, H2" actif suivant en passant entre un jeu 80 de deux rampes convergentes disposées le long du trajet des tournettes 38. Le maneton 78 est ainsi positionné automatiquement vers l'amont par rapport au sens de déplacement des tournettes 38. A la sortie de ce jeu 80 de rampes convergentes, les pignons 54 engrènent directement avec la crémaillère 56 de sorte que l'orientation des tournettes 38 peut se déduire aisément de sa position le long du trajet 36 de chauffage tant que le pignon 54 est en prise avec la crémaillère 56.

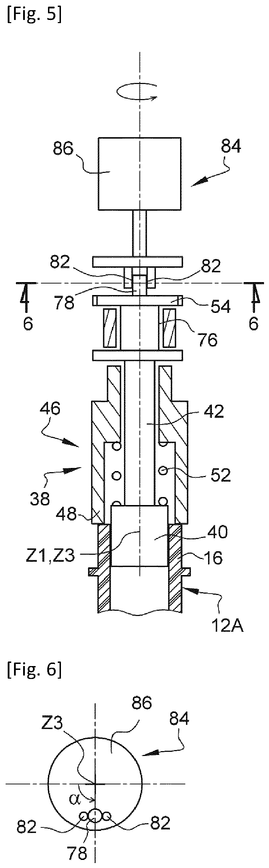

Lorsque les tournettes 38 arrivent au niveau de la première roue 60 de guidage, le maneton 78 est reçu entre deux doigts 82 d'un dispositif 84 d'orientation qui est porté par la première roue 60 de guidage. Le dispositif 84 d'orientation comporte aussi un moteur 86 qui permet de faire tourner les doigts 82 autour de l'axe "Z3" par rapport à la première roue 60 de guidage pour pouvoir orienter les tournettes 38 autour de leurs axes "Z3", comme cela est illustré aux figures 5 et 6. La première roue 60 de guidage comporte ainsi plusieurs dispositifs 84 d'orientation qui sont agencés à la périphérie de manière que chaque tournette 38 soit prise en charge par un dispositif 84 d'orientation sur le brin engrené.

En variante non représentée de l'invention, les crémaillères et/ou les dispositifs d'orientation peuvent être remplacés par un moteur individuel d'entraînement en rotation de la tournette 38 qui est porté par chaque maillon 46.

Le paramétrage de chaque organe 22 de chauffage est susceptible d'être commandé pour chauffer plus ou moins certaines portions du corps 14 de la préforme 12A. Les paramètres susceptibles d'être réglés comprennent par exemple la position de chaque organe 22 de chauffage par rapport au trajet 36 de chauffage et/ou la puissance du rayonnement émis par chaque organe 22 de chauffage et/ou l'opacification des réflecteurs situés en face de certains organes 22 de chauffage. Les paramètres sont par exemple commandés automatiquement par une unité électronique de commande. Ainsi, en maîtrisant simultanément l'orientation de la tournette 38 et la puissance du rayonnement chauffant en tout point du trajet 36 de chauffage, il est possible d'effectuer un chauffage du corps 14 de la préforme 12A selon un profil de chauffe dit "préférentiel" qui permet ensuite de conférer au récipient 12B final une forme non axisymétrique pendant l'opération de formage.

La préforme 12A ainsi chauffée est ensuite transmise à un poste 30 de formage de la station 26 de formage par l'intermédiaire de la roue 70 de transfert qui transmet les préformes à un autre dispositif de transport directement aval qui est ici formé par une deuxième roue 87 de transfert elle-même équipée de pinces 89 pour saisir individuellement chaque préforme 12A.

En variante non représentée de l'invention, une unique roue de transfert transporte les préformes entre la station de chauffage et la station de formage.

Comme expliqué précédemment, les postes 30 de formage sont portés par un carrousel 28 rotatif. En production, le carrousel 28 tourne de manière continue. Il permet ainsi de déplacer les préformes 12A/récipients 12B le long d'un trajet de formage qui forme un tronçon de l'itinéraire 13 de production.

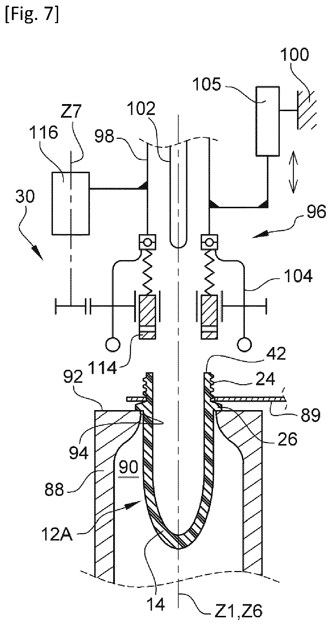

On a illustré plus en détails à la figure 7 un tel poste 30 de formage équipant la station 26 de formage. Le poste 30 de formage comporte de manière connue un moule 88 de formage qui est réalisé généralement en deux ou trois parties mobiles l'une par rapport à l'autre pour permettre à une pince 89 du dispositif de transport directement amont, ici la deuxième roue 87 de transfert, d'introduire la préforme 12A chaude dans une cavité 90 de moulage, formée à l'intérieur de ce moule 88, et pour permettre de retirer le récipient 12B du moule 88 après l'opération de formage. Lorsque les parties de moule 88 sont assemblées, le moule 88 présente une face 92 supérieure globalement plane qui est traversée par un orifice 94 de passage d'axe vertical "Z6" qui débouche verticalement dans la cavité 90 de moulage. Chaque moule 88 forme ainsi un organe individuel de support pour une préforme 12A qui permet de la transporter le long du trajet de formage.

Le poste 30 de formage comporte aussi un dispositif 96 d'injection d'un fluide de formage, par exemple d'air, sous pression. Le dispositif 96 d'injection comporte une tuyère 98 qui est agencée verticalement au-dessus du moule 88, et qui est destinée à être commandé en coulissement vertical vers le bas dans l'axe "Z6" de l'orifice 94 de passage en regard du col 16 de la préforme 12A pour y injecter de l'air sous pression et ainsi forcer le matériau du corps 14 de la préforme 12A à se déformer et à épouser la forme de la cavité 90 de moulage.

Selon une conception connue du dispositif 96 d'injection, la tuyère 98 présente une forme tubulaire. Elle est mobile verticalement dans un bloc 100 porte-tuyère fixe du poste 30 de formage. La tuyère 98 est traversé selon l'axe "Z6" par une tige 102 d'étirage qui est commandée verticalement par un vérin, un moteur électrique ou un dispositif came/galet (non représentés) pour s'engager dans la préforme 12A et guider la déformation verticale de celle-ci au cours du formage, notamment par soufflage.

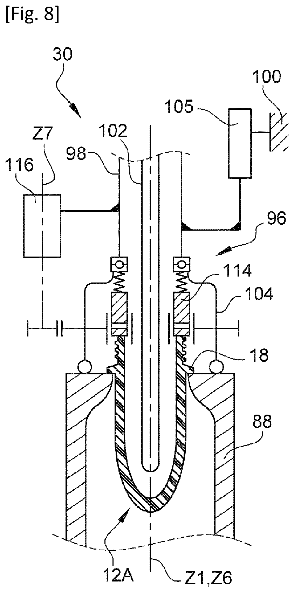

Dans l'exemple illustré, le poste 30 de formage est équipé d'une tuyère 98 cloche comparable à celle décrite dans le brevet français FR-2.764.544. Ainsi, la tuyère 98 est munie à son extrémité inférieure d'une pièce en forme de cloche 104 qui est ouverte à son extrémité inférieure pour venir en appui étanche sur la face 92 supérieure du moule 88, autour du col 16 de la préforme 12A, comme représenté à la figure 8, et non pas en appui sur ce dernier. Une fois la cloche 104 en appui sur le moule 88, la tuyère 98 se trouve en communication étanche avec l'intérieur de la préforme 12A pour y injecter du gaz sous pression.

En variante non représentée, l'extrémité inférieure de la tuyère 98 vient en contact étanche avec le col 16 de la préforme 12A pour injecter du gaz sous pression.

La tuyère 98, et donc la cloche 104, peuvent être positionnée verticalement entre deux positions extrêmes.

A la figure 7, la tuyère 98 se trouve dans une première position extrême, dite "position extrême escamotée", dans laquelle elle permet le chargement de la préforme 12A dans le moule 88, puis le déchargement du récipient 12B une fois formé. Dans cette position extrême escamotée, la cloche 104 est écartée verticalement au-dessus de la face 92 supérieure du moule 88.

A la figure 8, la tuyère 98 est illustrée dans une deuxième position extrême, dite "position extrême de travail", dans laquelle la cloche 104 est en appui étanche sur la face 92 supérieure du moule 88en englobant l'orifice 94 de passage et le col 16.

Les déplacements de la tuyère 98 entre ses deux positions extrêmes peuvent être commandés de différentes façons. Le coulissement de la tuyère 98 est par exemple commandé au moyen d'un moteur 105 électrique linéaire. En variante non représentée de l'invention, le coulissement de la tuyère est commandé à l'aide d'un système de vérin pneumatique étagé.

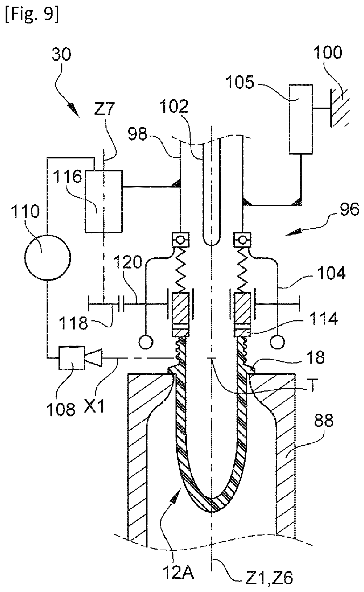

La tuyère 98 comporte un organe 114 d'entraînement qui permet de maintenir la préforme 12A fermement en position installée dans le moule 88 pendant l'opération de formage, notamment lorsque du fluide de formage sous pression est introduit dans la préforme 12A. L'organe 114 d'entraînement est écarté verticalement de la préforme 12A lorsque la tuyère 98 occupe sa position extrême escamotée. L'organe 114 d'entraînement est destiné à venir au contact de la préforme 12A installée lorsque la tuyère 98 est déplacée verticalement de sa position extrême escamotée jusqu'à une position intermédiaire déterminée entre ses deux positions extrêmes, dite position intermédiaire d'orientation, qui est illustrée à la figure 9, dans laquelle la cloche 104 est rapprochée de la face 92 supérieure du moule 88 sans venir en contact avec la face 92 supérieure du moule 88. De cette manière au moins un tronçon inférieur du col 16 de la préforme 12A demeure visible depuis l'extérieur.

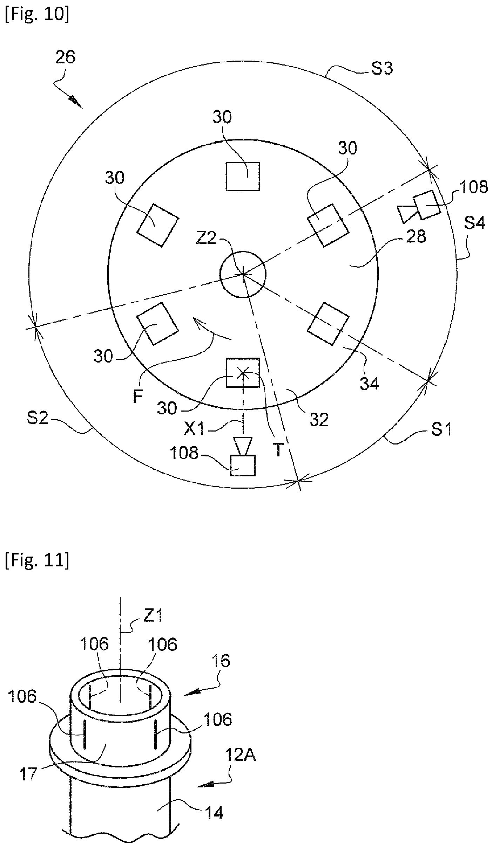

Les postes 30 de formage sont agencées sur une trajectoire circulaire commune centrée sur l'axe "Z2" central. Pendant leur déplacement, les postes 30 de formage entraînent ainsi de manière continue les corps 12 creux le long du trajet de formage en forme d'arc de cercle, formant un tronçon de l'itinéraire 13 de production. De manière générale, la trajectoire circulaire des postes 30 de formage est divisée en quatre secteurs distincts, comme cela est représenté à la figure 10.

Sur un premier secteur "S1", dit de déchargement et de chargement, la tuyère 98 est commandée dans sa position extrême escamotée pour permettre d'introduire une préforme 12A dans le moule 88, par exemple la préforme 12A est amenée au moyen d'une pince 89 comme cela est illustré à la figure 7.

Puis sur un deuxième secteur "S2" agencé directement en aval du premier secteur "S1 ", la tuyère 98 est commandée dans sa position intermédiaire d'orientation. La pince 89 est alors retirée.

Sur un troisième secteur "S3" de soufflage, la tuyère 98 occupe sa position extrême de travail pour permettre le formage de la préforme 12A en récipient final.

A l'issue du troisième secteur "S3", le poste 30 de formage entre dans un quatrième secteur "S4" de vérification dans lequel la tuyère 98 est commandée dans sa position intermédiaire d'orientation.

A la sortie du quatrième secteur "S4", le poste 30 de formage revient directement dans le premier secteur "S1" dans lequel la tuyère 98 est commandée dans sa position extrême escamotée pour permettre l'extraction du récipient fini et l'insertion d'une nouvelle préforme 12A pour entamer un nouveau cycle de formage.

Comme expliqué en préambule, dans certaines applications il est nécessaire d'orienter le corps 12 creux avant la réalisation d'un traitement. Par exemple, une préforme 12A chauffée selon un profil de chauffe "préférentiel" devra être orientée en correspondance avec la forme de l'empreinte du moule dans le poste 30 de formage. A cet effet, comme illustré à la figure 11, il est connu de réaliser au moins un repère 106 angulaire sur le col 16 de la préforme 12A, car le col 16 ne subit aucune transformation.

Le repère 106 angulaire est par exemple formé en relief tel qu'un ergot ou une encoche réalisé sur le col 16. Il peut aussi s'agir d'une marque réalisée par chauffage local ou par impression.

Un décalage "α" angulaire entre la position angulaire actuelle de la préforme 12A et une position angulaire de référence est par exemple mesuré en au moins une zone, dite zone 107 de mesure, de l'itinéraire 13 de production. Le décalage "α" angulaire est ainsi un angle qui est mesuré autour de l'axe "Z1" principal du col 16 du corps 12 creux. Lorsque la préforme 12A parcourt le trajet de chauffage, la position angulaire de référence correspond à la position angulaire que devrait occuper la préforme 12A autour de son axe "Z1" principal par rapport à son organe de support afin que le profil de chauffe soit en coïncidence avec le repère 106 angulaire. Lorsque le corps 12 creux parcourt le trajet de formage, la position angulaire de référence correspond à la position angulaire que devrait occuper le corps 12 creux autour de son axe "Z1" principal par rapport au moule afin que le repère 106 angulaire, et donc le profil de chauffe, soit en coïncidence avec la forme de la cavité 90 de moulage.

Dans le cadre du présent brevet, le décalage "α" angulaire est ici déterminé comme étant orienté, c'est-à-dire qu'il est compris entre -180° et +180°, la valeur 0° correspondant à une position angulaire du corps 12 creux correspondant à sa position angulaire de référence.

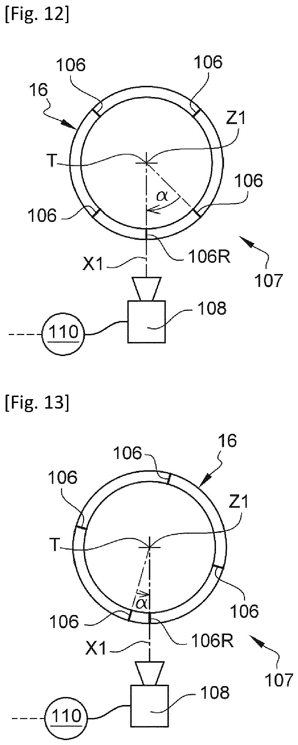

L'installation 10 de fabrication comporte ici plusieurs zones 107 de mesure. On décrira par la suite de manière générique la structure et le fonctionnement d'une zone 107 de mesure en référence aux figures 12 et 13, la description étant applicable à toutes les zones 107 de mesure de l'installation 10 de fabrication. On différenciera par la suite chaque zone 107 de mesure en faisant suivre la référence 107 d'une lettre associée à chacune de ces zones de mesure.

Chaque zone 107 de mesure est équipée d'un jeu d'au moins un dispositif 108 de prise d'image du col 16 du corps 12 creux. Le dispositif 108 de prise d'image est par exemple une caméra ou un appareil photo à capteur numérique. Le dispositif 108 de prise d'image est agencé de manière à prendre une image numérique sur laquelle le repère 106 angulaire aménagé sur le col 16 du corps 12 creux est susceptible d'apparaître. On pourra aussi prévoir des moyens (non représentés) d'éclairage du col 16 pour garantir une image nette du col 16 lors de la prise d'image. Les moyens d'éclairage sont par exemple intégrés au dispositif 108 de prise d'image.

Le dispositif 108 de prise d'image est conçu pour communiquer automatiquement une image du col 16 du corps 12 creux à une unité 110 électronique de commande afin de pouvoir mettre en oeuvre une étape "E1" de mesure du décalage "α" angulaire du corps 12 creux déterminé par rapport à la position angulaire de référence dans la zone 107 de mesure de l'itinéraire 13 de production.

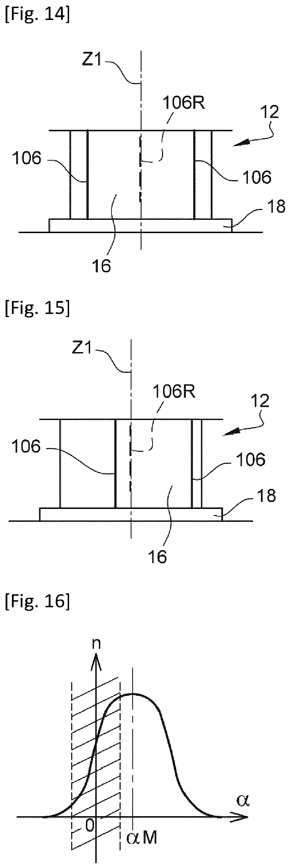

L'étape "E1" de mesure comporte une première phase "E1-1" de prise d'au moins une image du col 16 du corps 12 creux sur son organe de support par le dispositif 108 de prise d'image qui est agencé à une position prédéterminée par rapport à l'itinéraire 13 de production lors de la prise d'image. De telles images sont par exemple illustrées aux figures 14 et 15.

Le champ de vision du dispositif 108 de prise d'image se présente globalement sous la forme d'un cône d'axe principal appelé axe "X1" de prise de vue. Le dispositif 108 de prise d'image est agencé de manière que, au moment d'une prise d'image, son axe "X1" de prise de vue soit orienté vers le col 16 de manière à prendre une image faisant apparaître la face 17 externe d'un côté du col 16. Dans l'exemple représenté aux figures 12 et 13, l'axe "X1" de prise de vue est agencé globalement radialement par rapport à l'axe "Z1" principal du col 16 du corps 12 creux, au même niveau que le col 16.

En variante non représentée de l'invention, l'axe "X1" de prise de vue présente une autre orientation, par exemple il est agencé coaxialement à l'axe "Z1" principal du col 16 du corps 12 creux. Le dispositif 108 de prise d'image est monté fixe par rapport au sol et son axe "X1" de prise de vue est orienté vers un point "T" de mire déterminé, fixe par rapport au sol, de la trajectoire de production. Le point "T" de mire correspond à l'endroit où se situe le col 16 d'un corps 12 creux qui passe dans la zone 107 de mesure.

Ainsi, le dispositif 108 de prise d'image est apte à prendre automatiquement "à la volée" l'image du col 16 lorsqu'il passe au point "T" de mire, dans l'axe "X1" de prise de vue du dispositif 108 de prise d'image. Ainsi, un unique jeu d'au moins un dispositif 108 de prise d'image est suffisant pour prendre une image du col 16 de chacun des corps 12 creux de la file lors de leur passage dans la zone 107 de mesure.

Lorsque ladite zone 107 de mesure n'est couverte que par un unique dispositif 108 de prise d'image dont l'axe "X1" de prise de vue est orienté radialement, il est préférable que le corps 12 creux soit équipée d'au moins deux repères 106 angulaires diamétralement opposés de manière à garantir qu'au moins l'un des repères 106 angulaires apparaisse sur l'image prise. Dans les exemples représentés aux figures 11 à 15, le col 16 du corps 12 creux comporte quatre repères 106 angulaires répartis régulièrement. Lorsque le profil de chauffe présente un motif répété tous les 90°, comme c'est ici le cas, les quatre repères angulaires peuvent rester identiques.

En variante, lorsque l'axe "X1" de prise de vue est agencé coaxialement à l'axe "Z1" principal du col 16, le col 16 est susceptible de ne comporter qu'un seul repère 106 angulaire visible depuis un unique dispositif de prise d'image situé dans l'axe "Z1" principal du col 16, par exemple lorsque le repère 106 angulaire est situé sur la collerette.

En variante, la zone 107 de mesure comporte un jeu de plusieurs dispositifs 108 de prise d'image qui sont montés fixes par rapport au sol. Les axes "X1" de prise de vue de chacun des dispositifs 108 de prise d'image est orienté vers l'axe "Z1" principal du col 16 d'un corps 12 creux passant audit point "T" de mire. Ceci permet à chacun des dispositifs 108 de prise d'image de prendre simultanément le même col 16 sous des angles différents. Ainsi, lorsque les dispositifs 108 de prise d'image sont disposés de manière à couvrir ensemble la totalité de la face 17 externe cylindrique du col 16, le col 16 peut n'être équipé que d'un seul repère 106 angulaire.

Le dispositif 108 de prise d'image est susceptible de communiquer l'image capturée du col 16 à l'unité 110 électronique de commande, par exemple par une liaison filaire ou par un signal électromagnétique adapté.

Lors d'une deuxième phase "E1-2" de traitement de l'étape "E1" de mesure, chaque image prise par le jeu d'au moins un dispositif 108 de prise d'image est traitée informatiquement pour détecter la position angulaire d'un repère 106 angulaire visible sur l'image par rapport à la position angulaire de référence. A cet effet, l'unité 110 électronique de commande est munie d'un logiciel de traitement d'image qui permet d'identifier le ou les repères 106 angulaires apparaissant sur l'image.

Une fois la position des repères 106 angulaires identifiée sur l'image, une troisième phase "E1-3" est enclenchée au cours de laquelle le décalage "α" angulaire du corps 12 creux est déterminé par l'unité 110 électronique de commande.

Comme cela est illustré aux figure 14 et 15, la position du dispositif 108 de prise d'image étant fixe, l'endroit, dit "point 106R de référence", où devrait se situer l'un des repères 106 angulaires sur l'image pour que le corps 12 creux occupe sa position angulaire de référence est invariable. Ce point 106R de référence est déterminé avant la mise en oeuvre du procédé. L'unité 110 électronique de commande calcule le décalage "α" angulaire en fonction de la distance transversale entre ce point 106R de référence et la position actuelle du repère 106 angulaire identifié sur l'image. En fonction de la position actuelle du repère 106 angulaire par rapport au point 106R de référence, à droite ou à gauche comme illustré aux figures, l'unité 110 électronique détermine aussi le sens du décalage "α" angulaire par rapport à la position de référence.

L'installation 10 de fabrication représentée à la figure 1, comporte au moins deux telles zones 107 de mesure équipées de tels dispositifs 108 de prise d'image.

Une première zone 107A de mesure est agencée en périphérie de la roue 68 à encoches, juste avant que les préformes 12A ne soient prises en charge par une tournette 38.

La position de chaque préforme 12A est ensuite corrigée individuellement lors d'une opération de correction en fonction du décalage "α" angulaire mesuré pour ladite préforme 12A dans une première zone 112A de correction qui est agencée en aval de la première zone 107A de mesure.

La première zone 112A de correction est agencé sur le première tronçon "P1" passif du trajet de chauffage, après que la préforme 12A ait été prise en charge par une tournette 38. Ainsi, les dispositifs 84 d'orientation de la première roue 60 de guidage permettent d'orienter correctement les tournettes 38 de manière à faire correspondre la position angulaire du maneton 78 avec une position angulaire déterminée du repère 106 angulaire de la préforme 12A. Ceci permet ainsi de faire coïncider le profil de chauffe de la préforme 12A avec le repère 106 angulaire.

La deuxième zone 107B de mesure est agencée juste après qu'une préforme 12A ait été installée dans un moule 88, sur le deuxième secteur "S2" angulaire. Ainsi, l'orientation de la préforme 12A peut être corrigée, lors d'une opération de correction, après son installation dans le moule 88 dans une deuxième zone 112B de correction qui est agencée en aval de la deuxième zone 107B de mesure, ici toujours sur le deuxième secteur "S2" angulaire, afin de faire correspondre exactement la position du repère 106 angulaire, et donc du profil de chauffe, avec la forme de la cavité 90 de moulage.

La correction de la position angulaire de la préforme 12A est par exemple réalisée au moyen d'une tuyère 98 rotative telle que celle décrite dans le document EP 1 261 471 B1.

L'organe 114 d'entraînement est monté tournant autour de l'axe "Z6" par rapport au moule 88 de manière à pouvoir entraîner la préforme 12A en rotation autour de son axe "Z1" principal lorsqu'il occupe sa position intermédiaire d'orientation. L'organe 114 d'entraînement est susceptible d'être entraîné en rotation dans les deux sens de manière commandé par un moyen motorisé d'entraînement en rotation, par exemple un moteur 116 électrique. Le moteur 116 électrique est commandé automatiquement par l'unité 110 électronique de commande, comme cela est illustré à la figure 9.

De manière non limitative, dans l'exemple représenté aux figures, l'organe 114 d'entraînement est solidaire de la cloche 104 en rotation autour de l'axe "Z6" laquelle peut tourner autour de cet axe "Z6" par rapport à la tuyère 98 à l'extrémité inférieure de laquelle elle est fixée. En revanche, la cloche 104 est solidaire verticalement de la tuyère 98. L'organe 114 d'entraînement peut coulisser verticalement par rapport à cet ensemble lorsque la tuyère 98 se déplace de sa position intermédiaire d'orientation vers sa position extrême de travail. Par exemple, l'organe 114 d'entraînement est guidé en coulissement dans la cloche 104 par des cannelures internes de la cloche 104 qui garantissent aussi la solidarisation en rotation autour de l'axe "Z6" de la cloche 104 et de l'organe 114 d'entraînement.

Lorsque la tuyère 98 est dans sa position intermédiaire d'orientation illustrée à la figure 9, elle est susceptible d'être entraînée en rotation par le dispositif d'entraînement. Ce dispositif d'entraînement comporte pour l'essentiel le moteur 116 électrique (ainsi que son module de commande) qui commande la rotation d'un pignon 118 d'engrenage d'axe "Z7" parallèle à l'axe "Z6". Le moteur 116 électrique est ici monté solidaire avec le bloc 100 porte-tuyère.

La cloche 104 comporte une roue 120 dentée externe qui engrène avec le pignon 54, de telle sorte que le moteur 116 peut faire tourner la cloche 104, et par son intermédiaire, l'organe 114 d'entraînement.

Le fonctionnement de l'installation 10 de fabrication est à présent décrit pour une préforme 12A déterminée.

Lorsque l'installation 10 de fabrication produit des récipients 12B, la préforme 12A est d'abord prise en charge par une encoche de la roue 68 à encoches. La position angulaire de la préforme 12A est mesurée dans la première zone 107A de mesure. Puis, chaque tournette 38 est orientée dans la première zone 112B de correction, en fonction de la mesure du décalage "α" angulaire de ladite préforme 12A effectuée dans la première zone 107A de mesure, par le dispositif 84 d'orientation avant de prendre en charge une préforme 12A associée au point 64 de prise en charge de la station 20 de chauffage de manière à faire correspondre la position angulaire de la tournette 38 avec la position angulaire de préforme 12A. La préforme 12A est ensuite transportée le long du trajet 36 de chauffage par une tournette 38 associée. Le corps 14 de la préforme 12A est chauffé pendant que la préforme 12A parcourt les tronçons "H1, H2" actifs du trajet 36 de chauffage. Lorsque la préforme 12A atteint le point 66 de transfert le long de l'itinéraire 13 de production, elle est ensuite prise en charge par une pince 72 associée de la roue 70 de transfert qui transfert ensuite la préforme 12A à la pince 89 d'un dispositif de transport. Ensuite la préforme 12A est installée dans le moule 88 d'un poste 30 de formage associé par la pince 89. Les pinces 89 sont conçues pour éviter que la préforme 12A ne tourne autour de son axe "Z1" principal afin de conserver la préforme 12A au plus proche de sa position angulaire de référence.

Cependant, il arrive fréquemment que la préforme 12A glisse lors de son transfert d'un dispositif de transport à l'autre en aval de la station 20 de chauffage. De plus, la préforme 12A est libre de tourner autour de son axe "Z1" principal dans le moule 88 jusqu'à ce que l'organe 114 d'entraînement vienne la bloquer. Pour permettre de corriger ce glissement, le décalage "α" angulaire de la préforme 12A par rapport à sa position angulaire de référence est mesuré dans la deuxième zone 107B de mesure à l'aide du repère 106 angulaire lorsque la préforme 12A vient d'être installée dans le moule 88.

La position angulaire de la préforme 12A est corrigée en aval de la deuxième zone 107B de mesure, dans la deuxième zone 112B de correction, en fonction du décalage "α" angulaire mesuré pour ladite préforme 12A dans la deuxième zone 107B de mesure, au moyen de la tuyère 98 rotative.

Une telle installation 10 de fabrication permet d'obtenir des récipients 12B de bonne qualité en garantissant que le profil de chauffe de la préforme 12A corresponde bien à la forme de la cavité 90 de moulage. Cependant, chaque opération de correction de la position de la préforme 12A présente une durée proportionnelle à la valeur du décalage "α" angulaire à corriger dans la deuxième zone 112B de correction. Il en résulte que le débit de production est limité par les opérations de correction.

En outre, il arrive que le profil de chauffe soit légèrement décalé par rapport à la position du repère 106 angulaire. Ceci peut être dû à un glissement des préforme 12A entre la première zone 107A de mesure et leur prise en charge par une tournette 38. Bien que de telles erreurs soient généralement très faibles, il demeure possible d'améliorer encore la qualité du récipient 12B produit en réduisant au minimum l'angle de décalage "α". En effet, une tolérance sur le décalage angulaire est admissible, c'est-à-dire que lorsque le décalage angulaire est compris dans une plage déterminée, par exemple entre -5° et +5°, on considère que l'influence du décalage angulaire sur la qualité du récipient final obtenu est négligeable. Ainsi, en réduisant les décalages angulaires obtenus pour la majorité des préformes 12A dans ladite plage de tolérance, il est théoriquement possible d'éviter la majorité des opérations de correction de l'orientation des préformes.

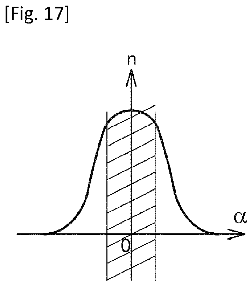

Les inventeurs ont constaté que, dans une certaine mesure, il est possible de réduire, en moyenne, la valeur des décalages "α" angulaires constatés dans des zones 107 de mesures agencées en aval de la première zone 107A de mesure. En considérant que les décalages "α" angulaires des différentes préformes d'un train de préformes sont réparties selon une courbe telle qu'une gaussienne, les décalages "α" angulaires sont agencés de part et d'autre de la moyenne "αM", comme cela est illustré aux figures 16 et 17. La zone de tolérance est représentée hachurée aux figures 16 et 17.

Lorsque ladite moyenne "αM" est, en valeur absolue, supérieure à un seuil déterminé, cela signifie que la majorité des préformes présentent un décalage angulaire n'appartenant pas à la plage de tolérance, comme illustré à la figure 16.

En choisissant de compenser l'orientation angulaire de toutes les préformes en amont de manière à créer une moyenne "αM" égale à 0°, comme représenté à la figure 17, le décalage "α" angulaire appliqué pendant l'opération de correction ultérieure serait globalement réduit. Ceci aura donc pour conséquence de diminuer la durée globale des opérations de correction. Lorsque la majorité des préformes présentent un décalage angulaire appartenant à la plage de tolérance, il est même possible d'éliminer totalement l'opération de correction pour ces préformes.

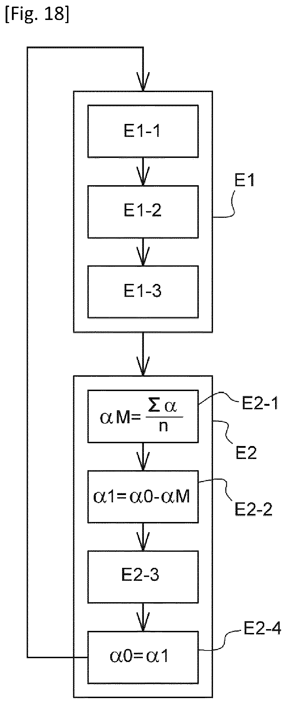

L'invention propose d'améliorer la qualité des récipients 12B et d'augmenter le débit de production grâce à un procédé de régulation de la position angulaire de préformes 12A dans l'installation 10 de fabrication. Comme illustré à la figure 18, le procédé réalisé selon l'invention comporte :
- la première étape "E1" de mesure d'un décalage "α" angulaire d'au moins une préforme 12A déterminée par rapport à une position angulaire de référence dans une zone 107 de mesure de l'itinéraire 13 de production ; et
- une deuxième étape "E2" de compensation de la position angulaire des préformes 12A suivantes, lors d'une opération de compensation, dans une zone 122 de compensation agencée en amont de ladite zone 107 de mesure au cours de laquelle l'orientation angulaire des préformes 12A suivantes est modifiée d'un angle "α1" actualisé de compensation qui est fonction du décalage "α" angulaire mesuré pour l'au moins une préforme 12A déterminée lors de la première étape "E1" de mesure et d'un angle "α0" courant de compensation de manière à réduire le décalage "α" angulaire des préformes 12A dans ladite zone 107 de mesure.

La première étape "E1" de mesure se déroule en trois phases "E1-1, E1-2, et E1-3" comme expliqué précédemment.

Lors de la première itération du procédé, l'angle "α0" courant de compensation est initialisé à 0°.

Lors des itérations suivantes, l'angle "α0" courant de compensation est fixé comme étant égal à l'angle "α1" actualisé de compensation calculé lors de l'itération immédiatement précédente du procédé.

Au lieu de simplement corriger la position angulaire des corps 12 creux dans une zone 112 de correction située en aval de chaque zone 107 de mesure, le procédé de régulation permet ainsi d'anticiper les décalages "α" angulaires que subiront les corps 12 creux suivants de la file dans la zone 122 de compensation afin de réduire la correction à effectuer dans la zone 112 de correction.

Les décalages "α" angulaires des corps 12 creux d'un train de corps creux suivent une distribution aléatoire. Il n'est donc pas possible d'éliminer totalement le décalage "α" angulaire constaté à chaque zone de mesure. En revanche, l'invention cherche à réduire la moyenne "αM" des décalages angulaires constatés dans certaines zones 107 de mesure. La moyenne "αM" des décalages angulaires est définie de manière classique comme étant la somme des décalages angulaires "α" mesurés pour le train de préformes 12A divisé par le nombre de corps 12 creux du train.

Lors de la deuxième étape "E2" de compensation, la moyenne "αM" des décalages angulaires mesurés pour chaque corps 12 creux du train de corps 12 creux est calculé en divisant la somme des décalages angulaires par le nombre de corps 12 creux lors d'une première phase "E2-1". La moyenne "αM" est calculée par l'unité 110 électronique de commande.

Pour obtenir une moyenne "αM" représentative de la répartition des corps 12 creux, il est bien entendu possible de prévoir d'écarter les valeurs de décalage "α" angulaire isolées qui s'écartent de manière trop importante de la moyenne "αM" établie lors de l'itération précédente du procédé afin de ne pas prendre en compte ces valeurs de décalage "α" angulaire jugées accidentelles. Ces valeurs de décalage "α" angulaire isolées risquent en effet de fausser la moyenne "αM" calculée par l'unité électronique de commande.

Puis, lors d'une deuxième phase "E2-2", l'angle "α1" actualisé de compensation est calculé en fonction de la moyenne "αM" calculée et en fonction de l'angle "α0" courant de compensation. A cet effet, à chaque itération, on retranche la moyenne "αM" calculée à partir des mesures effectuées lors de l'étape "E1" de mesure de l'angle "α0" courant de compensation.

Ainsi, la valeur de l'angle "α0" courant de compensation est modifiée lors de la deuxième étape "E2" lorsque la moyenne "αM" des décalages angulaire de chaque corps 12 creux d'un train d'au moins deux corps 12 creux déterminés consécutifs mesuré lors de la première étape "E1" de mesure est, en valeur absolue, supérieure à un seuil déterminé, par exemple supérieur à 0°.

Puis, lors d'une troisième phase "E2-3", l'orientation des corps 12 creux suivants est modifiée de l'angle "α1" actualisé de compensation.

Le procédé est réitéré cycliquement pour ajuster l'angle "α0" courant de compensation à chaque itération. Dans une quatrième phase "E2-4", l'angle "α1" actualisé de compensation à l'itération précédente est mémorisée et réutilisé en tant qu'angle "α0" courant de compensation lors de l'itération suivante. L'angle "α0" courant de compensation est ainsi régulièrement modifié pour rapprocher la nouvelle moyenne "αM" de 0°.

La moyenne "αM" est par exemple calculée pour un nouveau train de corps creux lorsque le dernier corps 12 creux du train précédent est sorti de la zone 107 de mesure.

En variante, la moyenne "αM" est calculée de manière glissante, c'est-à-dire qu'une nouvelle itération du procédé est engagée alors que l'itération précédente n'est pas finie. Ceci permet à l'unité électronique de commande de calculer une moyenne "αM" glissante du décalage angulaire. Ainsi, un corps 12 creux peut appartenir à au moins deux trains distincts de corps 12 creux.

On décrit par la suite plusieurs modes de réalisation de l'invention qui peuvent être mis en oeuvre individuellement ou de manière combinée sur la même installation 10 de fabrication.

Selon un premier mode de réalisation de l'invention, une première zone 122A de compensation est agencée sur le trajet 36 de chauffage pendant que les préformes 12A sont supportées par une tournette 38. La première zone 122A de compensation est plus particulièrement agencée sur le tronçon "P1" passif amont. Ceci permet de compenser la position des préformes 12A avant que leur chauffage ne soit commencé. La première zone 122A de compensation est ici formée par la première zone 112A de correction. La compensation de la position angulaire des préformes 12A est réalisée par rotation de chaque tournette 38 à leur passage dans la première zone 122A de compensation au moyen d'un des dispositifs 84 d'orientation.

Selon ce premier mode de réalisation, l'étape "E1" de mesure est réalisée dans une troisième zone 107C de mesure qui est agencée sur le trajet 36 de chauffage en aval de la première zone 122A de compensation. Etant donné que l'orientation de la tournette 38, et donc de la préforme 12A, est maîtrisée tout au long du trajet 36 de chauffage, la troisième zone 107C de mesure est susceptible d'être agencée à tout endroit du trajet 36 de chauffage en aval de la première zone 122A de compensation. Dans l'exemple représenté aux figures, la troisième zone 107C de mesure est agencée sur le tronçon "P3" passif aval. En variante, la troisième zone 107C de mesure est agencée sur le tronçon "P2" passif intermédiaire. L'agencement de la troisième zone 107C de mesure sur un tronçon passif "P2, P3" du trajet 36 de chauffage permet notamment d'éviter d'exposer les dispositifs 108 de prise d'image à la chaleur produite par les organes 22 de chauffage.

L'étape "E2" de compensation est par exemple réalisée en concomitance avec l'opération de correction de la position angulaire de la préforme 12A. Dans ce cas, pour chaque préforme, l'unité 110 électronique de commande effectue la somme "S" l'angle de correction mesuré pour ladite préforme 12A dans la première zone 107A de mesure et l'angle "α1" actualisé de compensation calculé à partir des mesures effectuées sur le train de préformes 12A précédentes dans la troisième zone 107C de mesure. La préforme 12A est ainsi tournée, en une seule opération, de ladite somme "S" au niveau de la première zone 122A de compensation qui forme aussi la première zone 112A de correction.

Le procédé de compensation selon ce premier mode de réalisation de l'invention permet ainsi de faire correspondre au mieux le profil de chauffe de chaque préforme 12A avec la position angulaire du repère 106 angulaire.

Selon un deuxième mode de réalisation de l'invention, une deuxième zone 122B de compensation est agencée sur le trajet 36 de chauffage pendant que les préformes 12A sont supportées par une tournette 38. La deuxième zone 122B de compensation est plus particulièrement agencée sur le tronçon "P3" passif aval, juste avant que la préforme 12A ne soit transférée à la première roue 70 de transfert et après que le chauffage de la préforme 12A ait été finalisé. Ceci permet de compenser la position des préformes 12A après la finalisation de leur chauffage. La compensation de la position angulaire des préformes 12A est réalisée par rotation de chaque tournette 38 à leur passage dans la deuxième zone 122B de compensation au moyen d'un des dispositifs 84 d'orientation.

Selon ce deuxième mode de réalisation, l'étape "E1" de mesure est réalisée dans la deuxième zone 107B de mesure qui est agencée dans la station 26 de formage, lorsque la préforme 12A est installée dans le moule 88 avant l'opération de formage.

Les mesures effectuées par la deuxième zone 107B de mesure permettent ainsi de corriger individuellement la position angulaire de chaque préforme 12A en aval, mais aussi de compenser la position des préformes 12A suivantes en amont.

L'étape "E2" de compensation est ainsi appliquée aux préformes qui arrivent au bout du trajet 36 de chauffage avant d'être transférées à la station 26 de formage. Cela permet de faire correspondre au mieux le profil de chauffe des préformes 12A avec la forme de la cavité 90 en prenant en compte les légers décalages qui sont susceptibles de se produire lors des différents transferts de préformes 12A d'un dispositif de transport au suivant et lors de leur installation dans le moule 88.

Selon un troisième mode de réalisation de l'invention, une troisième zone 122C de compensation est agencée sur la station 26 de formage, en amont de l'opération de formage.

La troisième zone 122C de compensation est plus particulièrement agencée en aval de la deuxième zone 107B de mesure et en amont de l'opération de formage. Ceci permet de compenser la position des préformes 12A avant que leur formage ne soit commencé. La troisième zone 122C de compensation est ici agencée sur le deuxième secteur "S2" angulaire du trajet de formage. La troisième zone 122C de compensation est ici formée par la deuxième zone 112B de correction. La compensation de la position angulaire des préformes 12A est réalisée par rotation de l'organe 114 d'entraînement lors du passage des préformes 12A dans la troisième zone 122C de compensation.

Selon ce troisième mode de réalisation, l'étape "E1" de mesure est réalisée dans une quatrième zone 107D de mesure qui est agencée sur la station 26 de formage en aval de l'opération de formage. La quatrième zone 107D de mesure est ici agencée sur le quatrième secteur "S4" angulaire, lorsque la préforme 12A a été transformée en récipient 12B, et en amont du point 34 de démoulage. Un tel agencement de la quatrième zone 107D de mesure permet notamment de vérifier que la position angulaire des préformes 12A a été corrigée correctement dans la deuxième zone 107B de correction.

L'étape "E2" de compensation est par exemple réalisée en concomitance avec l'opération de correction de la position angulaire de la préforme 12A. Dans ce cas, pour chaque préforme, l'unité 110 électronique de commande effectue la somme "S" l'angle de correction mesuré pour ladite préforme 12A dans la deuxième zone 107B de mesure et l'angle "α1" actualisé de compensation calculé à partir des mesures effectuées sur le train de préformes 12A précédentes dans la quatrième zone 107D de mesure. La préforme 12A est ainsi tournée, en une seule opération, de ladite somme "S" au niveau de la troisième zone 122C de compensation qui forme aussi la deuxième zone 112B de correction.

Le procédé de compensation selon ce troisième mode de réalisation de l'invention permet ainsi de faire correspondre au mieux le profil de chauffe de chaque préforme 12A avec la forme de la cavité 90 de moulage.

Le procédé réalisé selon les enseignements de l'invention permet avantageusement de réduire la durée, voire de supprimer les opérations de correction de chacune des préformes dans les zones 112 de correction.

## Revendications

1. Procédé de régulation de la position angulaire de corps (12) creux dans une installation (10) de fabrication de récipients (12B) par formage de préformes (12A) en matériau thermoplastique dans laquelle les corps (12) creux sont déplacées en file le long d'un itinéraire (13) de production par des organes (38, 88) individuels de support, et dont chacun est équipé de moyens pour faire tourner le corps (12) creux autour de son axe (Z1), le procédé comportant une première étape (E1) de mesure d'un décalage (α) angulaire d'au moins un corps (12) creux déterminé par rapport à une position angulaire de référence dans une zone (107B, 107C, 107D) déterminée de mesure de l'itinéraire (13) de production,
**caractérisé en ce qu'**il comporte une deuxième étape (E2) de compensation de la position angulaire des corps (12) creux suivants dans une zone (112A, 112B, 112C) de compensation agencée en amont de ladite zone (107B, 107C, 107D) de mesure au cours de laquelle l'orientation angulaire des corps (12) creux suivants est modifiée d'un angle (α1) actualisé de compensation qui est fonction du décalage (α) angulaire mesuré pour l'au moins un corps (12) creux déterminée lors de la première étape (E1) et qui est fonction d'un angle (α0) courant de compensation de manière à réduire le décalage (α) angulaire des corps (12) creux dans ladite zone (107B, 107C, 107D) de mesure.

2. Procédé selon la revendication précédente, **caractérisé en ce que** la valeur de l'angle (α0) courant de compensation est modifiée lors de la deuxième étape (E2) lorsque la moyenne (αM) des décalages angulaire de chaque corps (12) creux d'un train d'au moins deux corps (12) creux déterminés consécutifs mesuré lors de la première étape (E1) de détection est, en valeur absolue, supérieure à un seuil déterminé.

3. Procédé selon l'une quelconque des revendications précédentes, **caractérisé en ce que**, lors de la deuxième étape (E2) de compensation, l'angle (α1) actualisé de compensation est calculé en retranchant la moyenne (αM) des décalages angulaires du train de préformes (12) déterminées de l'angle (α0) courant de compensation.

4. Procédé selon l'une quelconque des revendications précédentes, **caractérisé en ce que** le procédé est réitéré cycliquement, l'angle (α0) courant de compensation étant formé par l'angle (α1) actualisé de compensation de l'itération précédente.

5. Procédé selon la revendication précédente, **caractérisé en ce que**, lors de la première itération, l'angle (α0) courant de compensation est initialisé à 0°.

6. Procédé selon l'une quelconque des revendications précédentes, **caractérisé en ce que** l'installation (10) comporte une station (20) de chauffage qui est équipée d'un dispositif (24) de transport muni d'organes de support, appelés tournettes (38), dont chacun permet de transporter individuellement une préforme (12A) le long d'un trajet de chauffage formant un tronçon de l'itinéraire (13) de production et dont chacun permet de faire tourner la préforme (12A) autour de son axe (Z1), la zone (112A, 112B) de compensation étant agencée sur le trajet de chauffage pendant que les préformes (12A) sont supportées par une tournette (38), la compensation de la position angulaire des préformes (12A) étant réalisée par rotation de chaque tournette (38) de l'angle (α1) actualisé de compensation à leur passage dans la zone (112A, 112B) de compensation.

7. Procédé selon la revendication précédente, **caractérisé en ce que** le dispositif (24) de transport comporte une chaîne (37) de tournettes (38) qui est guidée en déplacement par deux roues (60, 62) de guidage, la zone (112A, 112B) de compensation étant située dans un brin de la chaîne (37) qui engraine l'une des roues (60) de guidage.

8. Procédé selon la revendication précédente, **caractérisé en ce que** la zone (112A) de compensation est située dans un brin de la chaîne (37) qui engraine une roue (60) de guidage en aval d'un point (64) de prise en charge sur lequel les préformes (12A) sont transférée depuis un dispositif (68) de transport amont et avant le début du chauffage de la préforme (12A).

9. Procédé selon la revendication précédente, **caractérisé en ce que** la zone (107C) de mesure est située dans la station (20) de chauffage dans un brin de la chaîne (37) qui engraine une roue (60) de guidage, en amont d'un point (66) de transfert sur lequel les préformes (12A) sont transférée vers un dispositif (70) de transport aval en direction d'une station (26) de formage et après que le chauffage de la préforme (12) ait été finalisé.

10. Procédé selon l'une quelconque des revendications précédentes, **caractérisé en ce que** l'installation (10) de fabrication comporte une station (26) de formage dans laquelle chaque corps (12) creux est déplacé le long d'un trajet de formage formant un tronçon de l'itinéraire (13) de production, chaque préforme (12A) subissant une opération de formage en récipient (12B) final le long du trajet de formage.

11. Procédé selon la revendication 7, **caractérisé en ce que** la zone (112B) de compensation est située dans un brin de la chaîne (37) qui engraine une roue (60) de guidage, en amont d'un point (66) de transfert sur lequel les préformes (12A) sont transférée vers un dispositif (70) de transport aval en direction d'une station (26) de formage et après que le chauffage de la préforme (12A) ait été finalisé.

12. Procédé selon la revendication précédente prise en combinaison avec la revendication 10, **caractérisé en ce que** la zone (107B) de mesure est située dans la station (26) de formage agencée en aval de la station (20) de chauffage avant que l'opération de formage ne soit commencée.

13. Procédé selon la revendication 10, **caractérisé en ce que** la zone (112C) de compensation est située le long du trajet de formage, avant que l'opération de formage ne soit commencée.

14. Procédé selon la revendication précédente, **caractérisé en ce que** la zone (107B) de mesure est située dans la station (26) de formage le long du trajet de formage, après que l'opération de formage ait été finalisée.

## Patentansprüche

1. Verfahren zur Regelung der Winkelposition von Hohlkörpern (12) in einer Anlage (10) zur Herstellung von Behältern (12B) durch Formen von Vorformlingen (12A) aus thermoplastischem Material, wobei die Hohlkörper (12) von einzelnen Trägerelementen (38, 88) in einer Reihe entlang eines Produktionsweges (13) bewegt werden, von denen jedes mit Mitteln zum Bewirken einer Drehung des Hohlkörpers (12) um seine Achse (Z1) ausgestattet ist, wobei das Verfahren einen ersten Schritt (E1) der Messung eines Winkelversatzes (α) mindestens eines Hohlkörpers (12) umfasst, der in Bezug auf eine Referenzwinkelposition in einem bestimmten Messbereich (107B, 107C, 107D) des Produktionsweges (13) bestimmt wird,
**dadurch gekennzeichnet, dass** es einen zweiten Schritt (E2) der Kompensation des Winkelposition der nachfolgenden Hohlkörper (12) in einem dem Messbereich (107B, 107C, 107D) vorgelagert angeordneten Kompensationsbereich (112A, 112B, 112C) umfasst, in welchem die Winkelausrichtung der nachfolgenden Hohlkörper (12) um einen aktualisierten Kompensationswinkel (α1) geändert wird, welcher von dem für den mindestens einen Hohlkörper (12) gemessenen Winkelversatz (α) abhängig ist, der im ersten Schritt (E1) bestimmt wurde, und welcher von einem aktuellen Kompensationswinkel (α0) abhängig ist, so dass der Winkelversatz (α) der Hohlkörper (12) im Messbereich (107B, 107C, 107D) verringert wird.

2. Verfahren nach dem vorhergehenden Anspruch, **dadurch gekennzeichnet, dass** der Wert des aktuellen Kompensationswinkels (α0) im zweiten Schritt (E2) geändert wird, wenn der Mittelwert (αM) der Winkelversätze der einzelnen Hohlkörper (12) einer Reihe von mindestens zwei bestimmten aufeinander folgenden Hohlkörpern (12), die im ersten Schritt (E1) der Detektion gemessen wird, dem absoluten Betrag nach größer als ein bestimmter Schwellenwert ist.

3. Verfahren nach einem der vorhergehenden Ansprüche, **dadurch gekennzeichnet, dass** im zweiten Schritt (E2) der Kompensation der aktualisierte Kompensationswinkel (α1) berechnet wird, indem der Mittelwert (αM) der Winkelversätze der Reihe von bestimmten Vorformlingen (12) von dem aktuellen Kompensationswinkel (α0) abgezogen wird.

4. Verfahren nach einem der vorhergehenden Ansprüche, **dadurch gekennzeichnet, dass** das Verfahren zyklisch wiederholt wird, wobei der aktuelle Kompensationswinkel (α0) von dem aktualisierten Kompensationswinkel (α1) der vorhergehenden Iteration gebildet wird.

5. Verfahren nach dem vorhergehenden Anspruch, **dadurch gekennzeichnet, dass** in der ersten Iteration der aktuelle Kompensationswinkel (α0) mit 0° initialisiert wird.

6. Verfahren nach einem der vorhergehenden Ansprüche, **dadurch gekennzeichnet, dass** die Anlage (10) eine Erwärmungsstation (20) aufweist, welche mit einer Transportvorrichtung (24) ausgestattet ist, die mit Trägerelementen versehen ist, Drehhalter (Spinner) (38) genannt, von denen jeder ermöglicht, einen Vorformling (12) einzeln entlang einer Erwärmungsstrecke, die ein Teilstück des Produktionsweges (13) bildet, zu transportieren, und von denen jeder ermöglicht, ein Drehen des Vorformlings (12A) um seine Achse (Z1) zu bewirken, wobei der Kompensationsbereich (112A, 112B) auf der Erwärmungsstrecke angeordnet ist, während die Vorformlinge (12A) von einem Drehhalter (38) getragen werden, wobei die Kompensation der Winkelposition der Vorformlinge (12A) bei ihrem Durchgang durch den Kompensationsbereich (112A, 112B) durch Drehung jedes Drehhalters (38) um den aktualisierten Kompensationswinkel (α1) bewirkt wird.

7. Verfahren nach dem vorhergehenden Anspruch, **dadurch gekennzeichnet, dass** die Transportvorrichtung (24) eine Kette (37) von Drehhaltern (38) aufweist, welche von zwei Führungsrädern (60, 62) für eine Bewegung geführt wird, wobei sich der Kompensationsbereich (112A, 112B) in einem Trum der Kette (37) befindet, das mit einem der Führungsräder (60) in Eingriff steht.

8. Verfahren nach dem vorhergehenden Anspruch, **dadurch gekennzeichnet, dass** sich der Kompensationsbereich (112A) in einem Trum der Kette (37), das mit einem Führungsrad (60) in Eingriff steht, nach einem Punkt (64) der Lastaufnahme, an welchem die Vorformlinge (12A) von einer vorgelagerten Transportvorrichtung (68) übertragen werden, und vor dem Beginn der Erwärmung des Vorformlings (12A) befindet.

9. Verfahren nach dem vorhergehenden Anspruch, **dadurch gekennzeichnet, dass** sich der Messbereich (107C) in der Erwärmungsstation (20) in einem Trum der Kette (37), das mit einem Führungsrad (60) in Eingriff steht, vor einem Übertragungspunkt (66), an welchem die Vorformlinge (12A) zu einer nachgelagerten Transportvorrichtung (70) in Richtung einer Formstation (26) übertragen werden, und nachdem die Erwärmung des Vorformlings (12A) beendet ist, befindet.

10. Verfahren nach einem der vorhergehenden Ansprüche, **dadurch gekennzeichnet, dass** die Anlage (10) zur Herstellung eine Formstation (26) aufweist, in welcher jeder Hohlkörper (12) entlang einer Formstrecke bewegt wird, die ein Teilstück des Produktionsweges (13) bildet, wobei jeder Vorformling (12A) entlang der Formstrecke einem Arbeitsgang der Formung zu einem fertigen Behälter (12B) unterzogen wird.

11. Verfahren nach Anspruch 7, **dadurch gekennzeichnet, dass** sich der Kompensationsbereich (112B) in einem Trum der Kette (37), das mit einem Führungsrad (60) in Eingriff steht, vor einem Übertragungspunkt (66), an welchem die Vorformlinge (12A) zu einer nachgelagerten Transportvorrichtung (70) in Richtung einer Formstation (26) übertragen werden, und nachdem die Erwärmung des Vorformlings (12A) beendet ist, befindet.

12. Verfahren nach dem vorhergehenden Anspruch in Verbindung mit Anspruch 10, **dadurch gekennzeichnet, dass** sich der Messbereich (107B) in der Formstation (26), die der Erwärmungsstation (20) nachgelagert angeordnet ist, bevor der Arbeitsgang des Formens begonnen wird, befindet.

13. Verfahren nach Anspruch 10, **dadurch gekennzeichnet, dass** sich der Kompensationsbereich (112C) entlang der Formstrecke, bevor der Arbeitsgang des Formens begonnen wird, befindet.

14. Verfahren nach dem vorhergehenden Anspruch, **dadurch gekennzeichnet, dass** sich der Messbereich (107B) in der Formstation (26) entlang der Formstrecke, nachdem der Arbeitsgang des Formens beendet ist, befindet.

## Claims

1. Method of regulation of the angular position of hollow bodies (12) in an installation (10) for production of containers (12B) by forming thermoplastic material preforms (12A) in which the hollow bodies (12) are moved in single file along a production itinerary (13) by individual support members (38, 88), each of which is equipped with means for causing the hollow body (12) to turn about its axis (Z1), the method including a first step (E1) of measuring an angular offset (α) of at least one particular hollow body (12) relative to a reference angular position in a particular measurement zone (107B, 107C, 107D) of the production itinerary (13), **characterized in that** it includes a second step (E2) of compensation of the angular position of the subsequent hollow bodies (12) in a compensation zone (112A, 112B, 112C) upstream of said measurement zone (107B, 107C, 107D) during which the angular orientation of the subsequent hollow bodies (12) is modified by an updated compensation angle (α1) that is a function of the angular offset (α) measured for the at least one particular hollow body (12) in the first step (E1) and that is a function of a current compensation angle (α0) in such a manner as to reduce the angular offset (α) of the hollow bodies (12) in said measurement zone (107B, 107C, 107D).

2. Method according to the preceding claim, **characterized in that** the value of the current compensation angle (α0) is modified in the second step (E2) if the mean (αM) of the angular offsets of each hollow body (12) of a string of at least two consecutive particular hollow bodies (12) measured in the first detection step (E1) has an absolute value above a particular threshold.

3. Method according to either one of the preceding claims, **characterized in that** in the second compensation step (E2) the updated compensation angle (α1) is calculated by subtracting the mean (αM) of the angular offsets of the string of particular preforms (12) from the current compensation angle (α0).

4. Method according to any one of the preceding claims, **characterized in that** the method is reiterated cyclically, the current compensation angle (α0) being formed by the updated compensation angle (α1) of the preceding iteration.

5. Method according to the preceding claim, **characterized in that**, during the first iteration, the current compensation angle (α0) is initialized to 0°.

6. Method according to any one of the preceding claims, **characterized in that** the installation (10) includes a heating station (20) that is equipped with a transport device (24) provided with support means, termed turntables (38), each of which enables individual transportation of a preform (12A) along a heating path forming a section of the production itinerary (13) and each of which enables the preform (12A) to be caused to turn about its axis (Z1), the compensation zone (112A, 112B) being arranged on the heating path while the preforms (12A) are supported by a turntable (38), the compensation of the angular position of the preforms (12A) being achieved by rotation of each turntable (38) by the updated compensation angle (α1) in the compensation zone (112A, 112B).

7. Method according to the preceding claim, **characterized in that** the transport device (24) includes a chain (37) of turntables (38), movement of which is guided by two guide wheels (60, 62), the compensation zone (112A, 112B) being situated in a run of the chain (37) that meshes with one of the guide wheels (60).

8. Method according to the preceding claim, **characterized in that** the compensation zone (112A) is situated in a run of the chain (37) that meshes with a guide wheel (60) downstream of a take-up point (64) at which the preforms (12A) are transferred from an upstream transport device (68) and before the beginning of the heating of the preform (12A).

9. Method according to the preceding claim, **characterized in that** the measurement zone (107C) is situated in the heating station (20) in a run of the chain (37) that meshes with a guide wheel (60) upstream of a transfer point (66) at which the preforms (12A) are transferred to a downstream transport device (70) in the direction of a forming station (26) and after the heating of the preform (12) has been finished.

10. Method according to any one of the preceding claims, **characterized in that** the production installation (10) includes a forming station (26) in which each hollow body (12) is moved along a forming path forming a section of the production itinerary (13), each preform (12A) undergoing an operation of forming it into a final container (12B) along the forming path.

11. Method according to Claim 7, **characterized in that** the compensation zone (112B) is situated in a run of the chain (37) that meshes with a guide wheel (60) upstream of a transfer point (66) at which the preforms (12A) are transferred to a downstream transport device (70) in the direction of a forming station (26) and after the heating of the preform (12A) has been finished.

12. Method according to the preceding claim in combination with Claim 10, **characterized in that** the measurement zone (107B) is situated in the forming station (26) downstream of the heating station (20) before the forming operation is begun.

13. Method according to Claim 10, **characterized in that** the compensation zone (112C) is situated along the forming path before the forming operation is begun.

14. Method according to the preceding claim, **characterized in that** the measurement zone (107B) is situated in the forming station (26) along the forming path after the forming operation has been finished.
